(19) **Europäisches Patentamt**
**European Patent Office**
**Office européen des brevets**

(11) **EP 3 763 664 B2**

(12) **NEW EUROPEAN PATENT SPECIFICATION**
After opposition procedure

(45) Date of publication and mention
of the opposition decision:
**17.06.2026 Bulletin 2026/25**

(45) Mention of the grant of the patent:
**07.06.2023 Bulletin 2023/23**

(21) Application number: **20180862.3**

(22) Date of filing: **18.06.2020**

(51) International Patent Classification (IPC):
**B66C 23/90** *(2006.01)*

(52) Cooperative Patent Classification (CPC):
**B66C 23/905**

(54) **METHOD FOR OPERATING A CRANE, CRANE OPERATION SYSTEM AND CRANE COMPRISING IT**

VERFAHREN ZUM BETRIEB EINES KRANS, KRANBETRIEBSSYSTEM UND KRAN DAMIT

PROCÉDÉ DE FONCTIONNEMENT D'UNE GRUE, SYSTÈME DE COMMANDE DE GRUE ET GRUE LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.07.2019 DK PA201900833**

(43) Date of publication of application:
**13.01.2021 Bulletin 2021/02**

(73) Proprietor: **HMF Group A/S**
**8270 Højbjerg (DK)**

(72) Inventors:
• **Magnussen Griis Skouboe, Tobias**
**8960 Randers SØ (DK)**
• **Lyngsø, Søren**
**8240 Risskov (DK)**

(74) Representative: **Plougmann Vingtoft a/s**
**Strandvejen 70**
**2900 Hellerup (DK)**

(56) References cited:
EP-A1- 3 670 422    EP-A2- 1 038 823
EP-B1- 1 038 823    WO-A1-99/57057

EP 3 763 664 B2

## Description

### Field of invention

The present invention relates to a method for operating a crane, a crane operation system and a crane comprising such crane operation system.

### Prior art

In the prior art, it is very important that a mobile crane is levelled before a lifting task is carried out. This is typically achieved by extending the outriggers, hereby providing a solid platform for the crane's safe operation and efficient use.

Prior art mobile crane such as lorry cranes are designed for being operated only when being levelled prior to carrying out lifting tasks. Therefore, crane manufactures prescribe that the crane may only be operated when the inclination of the crane is within a pre-defined design specific value, typically being less than 5 %. If these prior art cranes nevertheless are operated on a steep slope having an inclination larger than the pre-defined design specific value (e.g. 5 %), the lifting force will have a significant horizontal component. If the horizontal component gets too high, it will overload the crane and any stabilisers in a way that they are not designed for. Accordingly, the prior crane operation systems do not allow a crane to perform a lifting task when the inclination of the crane is not within a pre-defined design specific value.

If the crane has a slew function and the horizontal component of the lifting force gets larger than the force holding the slew position of the crane in place, it will make the crane slew in an uncontrolled way.

Accordingly, the prior art cranes cannot be safely operated when the inclination of the crane vehicle is higher than a design specific value.

WO 99/57057 A1 discloses a crane installation suitable for lorry cranes. The crane installation is configured to stop the crane when the inclination of the crane exceeds a critical pre-defined level. The crane installation, however, does not allow the crane to be operated when the inclination of the crane exceeds a critical pre-defined level. Accordingly, this means that the crane cannot be operated if the inclination of the crane exceeds the critical pre-defined level.

Thus, there is a need for a method and system which reduces or even eliminates the above-mentioned disadvantages of the prior art.

It is an object of the invention to provide a method for operating a crane situated on a steep slope safe in a safe manner.

It is also an object of the invention to provide a crane operation system for operating a crane situated on a steep slope safe in a safe manner.

## Summary of the invention

The object of the present invention can be achieved by a method as defined in claim 1 and by a truck-mounted lorry crane comprising a crane operation system having the features as defined in claim 4. Preferred embodiments are defined in the dependent subclaims, explained in the following description and illustrated in the accompanying drawings.

The method according to the invention is a method for operating a lorry crane which is a truck mounted crane, the method comprising providing a lorry crane having at least one boom configured to carry a load, wherein the method comprises the step of detecting an inclination indicative parameter of the crane, wherein the inclination indicative parameter is the inclination of the crane, wherein the method comprises the step of detecting the inclination of the crane in several directions either by means of a multi-axis inclination sensor or by using several inclination sensors, wherein the method comprises the following steps:

- comparing the detected inclination indicative parameter of the crane with a pre-defined inclination indicative parameter;
- operating the crane in a normal mode if the detected inclination indicative parameter of the crane is smaller than or equal to the pre-defined inclination indicative parameter;
- operating the crane in a restricted mode, in which:

    a) the load capacity of the crane and
    b) the speed of the load or at least one boom and
    c) the acceleration of the load is reduced to a level that is lower than the level in normal mode, if the detected inclination indicative parameter of the crane is larger than the pre-defined inclination indicative parameter,

wherein the reduction of

    a) the load capacity of the crane and
    b) the speed of the load or at least one boom and
    c) the acceleration of the load in the restricted mode boom depends on the slew position of the boom.

Hereby, it is possible to provide a method which reduces or even eliminates the above-mentioned disadvantages of the prior art. Moreover, the method according to the invention makes it possible to operate a crane situated on a steep slope safe in a safe manner.

Throughout the specification and claims the term "crane" is referred to as "lorry crane" (also called truck mounted crane).

Whereas the crane installation WO 99/57057 A1 is configured to stop a crane if the inclination of the crane exceeds the critical pre-defined level, the method according to the invention provides a way of operating the crane in a safe restricted mode, when the inclination of the crane exceeds the critical pre-defined level. Accordingly, the method makes it possible to operate the crane in a larger range of inclinations including inclinations, at which the prior art cranes cannot be operated.

The method is suitable for operating a lorry crane (truck mounted crane) having at least one boom configured to carry a load. The boom may be a telescopic, or fixed arm that is used to move objects. The boom may be of any suitable type and size.

In one embodiment, the boom is a multi-segment telescopic boom.

In one embodiment, the boom is a fixed arm.

In one embodiment, the boom comprises a pair of boom sections and hinge members pivotally connecting one boom section to the other for swinging movement with respect thereto.

The method comprises the step of detecting an inclination indicative parameter of the crane. The inclination indicative parameter of the crane is the inclination (the angle relative to horizontal) of the crane.

In one embodiment, the inclination of the crane may be defined as the inclination of the crane base.

The method comprises the step of comparing the detected inclination indicative parameter of the crane with a pre-defined inclination indicative parameter. Hereby, it is possible to determine if the detected inclination indicative parameter is within a predefined range defined by the pre-defined inclination indicative parameter.

The method comprises the step of operating the crane in a normal mode if the detected inclination indicative parameter of the crane is smaller than or equal to the pre-defined inclination indicative parameter. Whenever the detected inclination indicative parameter of the crane is smaller than or equal to the pre-defined inclination indicative parameter, the crane can safely be operated in the normal mode.

If the detected inclination indicative parameter of the crane is larger than the pre-defined inclination indicative parameter, however, the crane is operated in a restricted mode, in which:

    a) the load capacity of the crane and
    b) the speed of the load or at least one boom and
    c) the acceleration of the load

is reduced to a level that is lower than the level in normal mode.

Accordingly, the method enables safe operation of the crane under conditions, in which the prior art methods for operating a lorry crane cannot be safely carried out.

By the term "the speed of the load" is meant the speed, at which the crane moves the load.

By the term "the speed of the at least one boom" is meant the speed, at which the crane moves the at least one boom.

By the term "the acceleration of the load" is meant the acceleration, at which the crane moves the load.

In the restricted mode the method according to the invention eliminates risk for uncontrolled movement of the crane by reducing the load capacity of the crane and the speed of the load or at least one boom and the acceleration of the load.

The restricted mode is an active mode, in which the crane is actively operated. This means that the crane can perform lifting task while being operated in the restricted mode. Accordingly, the restricted mode is not a mode, in which the operation of the crane is stopped as disclosed in WO 99/57057 A1.

According to the invention, the risk for uncontrolled movement of the crane is eliminated by reducing the load capacity of the crane. This means that the operator can only operate the crane in such a manner that the actual load of the crane is lower than a reduced level being lower than the allowable level under normal operations (normal mode). By way of example. If the maximum allowable load of the crane under normal operations (normal mode) is 10,000 kg, in a restricted mode the load capacity of the crane may be reduced to a lower value such as 8,000 kg.

The risk for uncontrolled movement of the crane is eliminated by reducing the speed of the load or at least one boom.

The risk for uncontrolled movement of the crane is eliminated by reducing the acceleration of the load.

The inclination indicative parameter is the inclination of the crane.

In one embodiment, the inclination of the crane is the inclination of the truck bed, wherein the inclination is measured as the angle between horizontal and the lateral axis of the truck bed (a direction extending along the truck bed and perpendicular to the longitudinal axis of the truck bed).

The method comprises the step of detecting the inclination of the crane in several directions either by means of a multi-axis inclination sensor or by using several inclination sensors. Hereby, it is possible to provide a plurality of inclination measurements and thus provide a more complex and sophisticated operation control.

In one embodiment, the lower level is selected in such a manner that uncontrolled movements of the crane are no longer possible. Hereby, it is possible to provide security for a safe operation of the crane. By the term "uncontrolled movements of the crane are no longer possible" is meant that conditions in which the crane cannot be controlled by the control system are avoided. In one embodiment, it is secured that "uncontrolled movements of the crane are no longer possible" by selecting the lower level in such a manner that the inclination of the truck cannot cause loads upon the crane in a direction and magnitude that it is not designed for.

The reduction of:

a) the load capacity of the crane and

b) the speed of the load or at least one boom and

c) the acceleration of the load in the restricted mode

depends on the slew position of the boom.

Hereby, it is possible to take into account the influence of the slew position of the boom when controlling the crane. In some configurations (slew position of the boom) the boom will have a positive contribution regarding the stability of the crane. However, in other configurations (slew position of the boom) the boom will have negative contribution regarding the stability of the crane.

In one embodiment, the selected values of the load capacity of the crane and the speed of the load or at least one boom and the acceleration of the load in the restricted mode is determined by tests carried out.

In one embodiment, the selected values of the load capacity of the crane and the speed of the load or at least one boom and the acceleration of the load in the restricted mode is determined on the basis of calculations.

In one embodiment, in the restricted mode, the load capacity of the crane is reduced to a level corresponding to at most the load capacity of the crane in the normal mode times cosine (cos) of the inclination angle (measured relative to horizontal). Hereby, it is possible to provide an ungraduated regulation (reduction) of the load capacity of the crane. Accordingly, it is possible to allow the crane to be operated with the highest possible safe load capacity for any give slope. This means that the method provides an automatic adaption of the load capacity for any give slope.

The lorry crane, which is a truck mounted crane comprising a crane operation system is a crane operation system for operating the lorry crane having at least one boom configured to carry a load, wherein the crane operation system comprises an inclination sensor arranged and is configured to detect the inclination indicative parameter of the crane, wherein the inclination indicative parameter is the inclination of the crane, wherein the crane operation system comprises a multi-axis inclination sensor or several inclination sensors configured to detect the inclination of the crane in several directions, wherein the crane operation system comprises a comparison unit configured to compare the detected inclination indicative parameter of the crane with a pre-defined inclination indicative parameter, wherein the crane operation system is configured to operate the crane in a normal mode if the detected inclination indicative parameter of the crane is smaller than or equal to the pre-defined inclination indicative parameter, wherein the crane operation system is configured to operate the crane in a restricted mode, in which:

a) the load capacity of the crane and

b) the speed of the load or at least one boom and

c) the acceleration of the load is reduced to a level that is lower than the level in normal mode, if the detected inclination indicative parameter of the crane is larger than the pre-defined inclination indicative parameter,

wherein the reduction of:

a) the load capacity of the crane and

b) the speed of the load or at least one boom and

c) the acceleration of the load in the restricted mode boom

depends on the slew position of the boom.

Hereby, it is possible to provide a crane operation system for operating a crane situated on a steep slope safe in a safe manner.

The lorry crane comprises at least one boom configured to carry a load. The at least one boom may be of any suitable type and size.

The crane operation system comprises a sensor arranged and configured to detect the inclination indicative parameter of the crane.

In one embodiment, the crane operation system comprises a sensor arranged and configured to carry out angle measurements.

In one embodiment, the crane operation system comprises several position sensors.

In one embodiment, the inclination of the crane may be defined as the inclination of the crane base. In one embodiment, the inclination of the crane may be defined as the inclination of the longitudinal axis of the lorry or the truck bed.

The crane operation system comprises a comparison unit configured to compare the detected inclination indicative parameter of the crane with a pre-defined inclination indicative parameter. Hereby, the crane operation system can determine if the inclination indicative parameter is within a pre-defined range.

The crane operation system is configured to operate the crane in a normal mode if the detected inclination indicative parameter of the crane is smaller than or equal to the pre-defined inclination indicative parameter, wherein the crane operation system is configured to operate the crane in a restricted mode, in which:

a) the load capacity of the crane and

b) the speed of the load or at least one boom and

c) the acceleration of the load is reduced to a level that is lower than the level in normal mode, if the detected inclination indicative parameter of the crane is larger than the pre-defined inclination indicative parameter.

Accordingly, the crane operation system makes it possible to carry out safe operation of the crane under conditions, in which the prior art lorry cranes cannot be safely operated by using prior art crane operation systems.

In the restricted mode the crane operation system according to the invention eliminates the risk for uncontrolled movement of the crane. This is done by either reducing the load capacity of the crane and the speed of the load or at least one boom and the acceleration of the load.

It is an advantage that the crane operation system is configured to reduce the maximum possible speed of the boom and load capacity of the crane when the crane is operated in the restricted mode (wherein the detected inclination indicative parameter of the crane is larger than the pre-defined inclination indicative parameter).

In one embodiment, the crane operation system comprises a control unit, by which it is possible to enter and change parameters in order to individually configure the crane operation system. Accordingly, the user of the system may change settings by using the control unit.

In one embodiment, the crane operation system comprises a human machine interface for entering and or changing parameters.

In one embodiment, the crane operation system comprises a wireless receiver configured to communicate with an external device such as a smartphone or a wireless remote control. Hereby, the user of the crane operation system can configure the crane operation system either by entering parameters, or by changing parameters or by selecting predefined parameters.

The crane operation system comprises an inclination sensor configured to measure the inclination of the crane. Hereby, it is possible to determine the inclination of the crane in an easy manner.

It is an advantage that the crane operation system comprises a multi-axis inclination sensor or several inclination sensors configured to detect the inclination of the crane in several directions. Hereby, it is possible to carry out a more complex regulation of the crane, in which the inclination of the crane in several directions is taken into account.

It may be advantageous that the lower level is selected in such a manner that uncontrolled movements of the crane are no longer possible.

Hereby, it is possible to use the crane operation system to operate the crane in a safe manner. By the term "uncontrolled movements of the crane are no longer possible" is meant that conditions in which the crane cannot be controlled by the control system are avoided. In one embodiment, it is secured that "uncontrolled movements of the crane are no longer possible" by selecting the lower level in such a manner that the inclination of the truck cannot cause loads upon the crane in a direction and magnitude that it is not designed for.

It may be an advantage that the reduction of:

     a) the load capacity of the crane and
     b) the speed of the load or at least one boom and
     c) the acceleration of the load in the restricted mode

depends on the slew position of the boom.

Hereby, it is possible to take into account the influence of the slew position of the boom when controlling the crane. This may be a great advantage since in some configurations (slew position of the boom) the boom will have a positive contribution regarding the stability of the crane, while, in other configurations (slew position of the boom) the boom will have negative contribution regarding the stability of the crane.

It may be advantageous that in the restricted mode, the load capacity of the crane is reduced to a level corresponding to at most the load capacity of the crane in the normal mode times cos.

Hereby, it is possible to use the crane operation system to carry out an ungraduated regulation (reduction) of the load capacity of the crane. Accordingly, it is possible to allow the crane to be operated with the highest possible safe load capacity for any give slope. This means that the crane operation system is configured to provide an automatic adaption of the load capacity for any give slope.

The crane according to the invention is a crane comprising a crane operation system according to the invention.

## Description of the Drawings

The invention will become more fully understood from the detailed description given herein below. The accompanying drawings are given by way of illustration only, and thus, they are not limitative of the present invention. In the accompanying drawings:

Fig. 1A      shows a schematic side view of a lorry crane according to the invention operated on a plane surface;

Fig. 1B      shows a schematic side view of the lorry crane shown in Fig. 1A operated on an inclined surface;

Fig. 2A      shows a perspective side view of a lorry crane according to the invention;

Fig. 2B      shows a perspective top view of the lorry crane shown in Fig. 2A;

Fig. 3      shows a perspective top view of the lorry crane shown in Fig. 2B and

Fig. 4      shows a flow chart illustration the method according to the invention.

## Detailed description of the invention

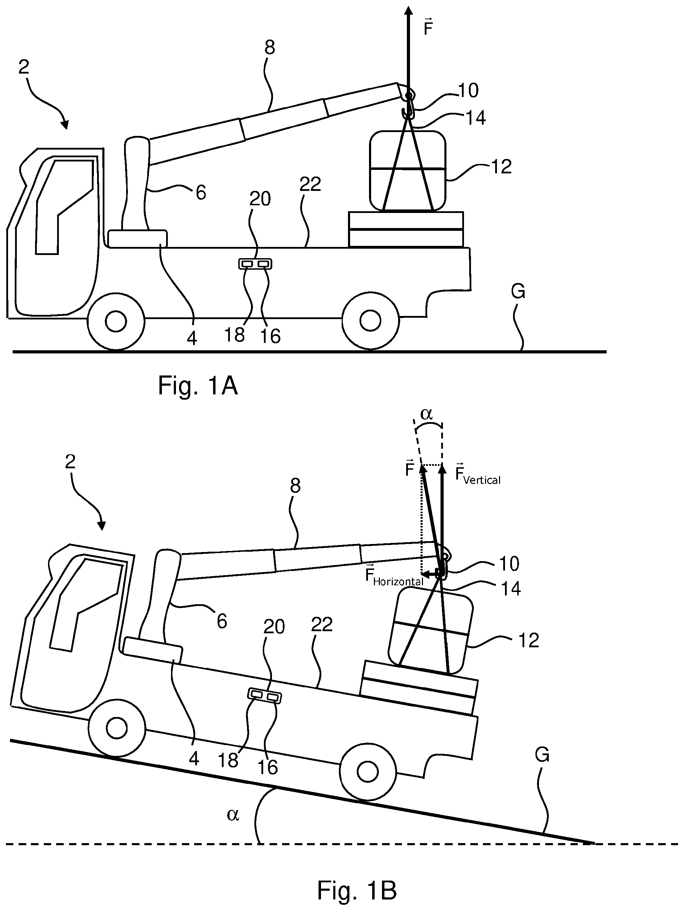

Referring now in detail to the drawings for the purpose of illustrating preferred embodiments of the present invention, a schematic side view of a lorry crane 2 of the present invention is illustrated in Fig. 1A.

The lorry crane 2 illustrated in Fig. 1A is operated on a non-sloped ground G. Accordingly, the surface of the ground G extends horizontally. The crane 2 comprises a truck bed 22 that is loaded with a load 12.

The crane 2, however, comprises a boom 8 rotatably mounted to a column 6 that is attached to a crane base 4 having a longitudinal axis X extending parallel to the ground G. The boom 8 is telescopic and comprises three segments.

The load 12 is attached to a hook 10 by means of a sling 14. The hook 10 is provided at the distal end of the boom 8. Accordingly, the boom 8 can apply a force F and herby lift the load 12.

The crane 2 comprises a crane operation system 20 having an inclination sensor 16 arranged and configured to detect the inclination of the crane 2.

The inclination sensor 16 may be arranged and configured to detect the inclination of the truck bed 12 of the crane 2. It is important to underline that the inclination sensor 16 may be arranged elsewhere and that the inclination sensor 16 may be configured to detect the inclination of another structure of the crane 2.

In one embodiment, the inclination sensor 16 may be arranged at or be integrated in the crane base 4 and thus be configured to detect the inclination of the crane base 4.

The crane operation system 20 comprises a comparison unit 18 configured to compare the detected the inclination with one or more inclination pre-defined values.

The crane operation system 20 is configured to compare the detected inclination indicative parameter of the crane with a pre-defined inclination indicative parameter.

Furthermore, the crane operation system 20 is configured to make sure that the crane 2 is operated in a normal mode N if the detected inclination indicative parameter of the crane 2 is smaller than or equal to the pre-defined inclination indicative parameter.

In one embodiment, the crane operation system 20 is configured to make sure that the crane 2 is operated in a normal mode N if the detected inclination of the crane 2 is smaller than or equal to the pre-defined inclination corresponding to 5 degrees relative to horizontal.

The crane operation system 20 is configured to operate the crane 2 in a restricted mode R, in which:

  a) the load capacity of the crane 2 and
  b) the speed of the load 12 or at least one boom 8 and
  c) the acceleration of the load 12 is reduced to a level that is lower than the level in normal mode N, if the detected inclination indicative parameter of the crane 2 is larger than the pre-defined inclination indicative parameter.

According to the invention, the inclination indicative parameter is one or more inclination measurements provided by using one or more inclination sensors.

The crane operation system 20 may comprise a control unit (not shown), by which it is possible to enter and change parameters in order to individually adapt the crane operation system 20 if required. Hereby, the user of the system may change settings. The crane operation system 20 may preferably comprise a human machine interface for entering and or changing parameters. The crane operation system 20 may comprise a wireless receiver configured to communicate with an external device such as a smartphone or a wireless remote control. Accordingly, the wireless receiver is suitable for setting or changing the pre-defined inclination indicative parameter.

Fig. 1B illustrates a schematic side view of the lorry crane 2 shown in Fig. 1A operated on an inclined surface. Accordingly, the slope of the ground G has a non-zero value represented by the angle $\alpha$ relative to horizontal (indicated with a dotted line).

Due to the slope of the ground G, the force $\vec{F}$ applied by the boom 8 is given by the sum of a horizontal component $\vec{F}_{horizontal}$ and a vertical component $\vec{F}_{vertical}$. Formalised this can be expressed in the following way.

$$(1) \qquad \vec{F} = \vec{F}_{horizontal} + \vec{F}_{vertical}$$

Accordingly, the boom 8 has to deliver an increased resulting force $\vec{F}$ in order to vertically displace the load 12. The vertical component $\vec{F}_{vertical}$ is given by:

$$(2) \qquad \vec{F}_{vertical} = \cos(\alpha)\vec{F}$$

If the slope $\alpha$ is 18 degrees by way of example, the vertical component $\vec{F}_{vertical}$ is:

$$(3) \qquad \vec{F}_{vertical} = \cos(18^o)\vec{F} = 0.95\vec{F}$$

A calculation reveals that the resulting force $\vec{F}$ must be increased by approximately 5 % in order to compensate for reduction of the vertical component $\vec{F}_{vertical}$ due to the slope.

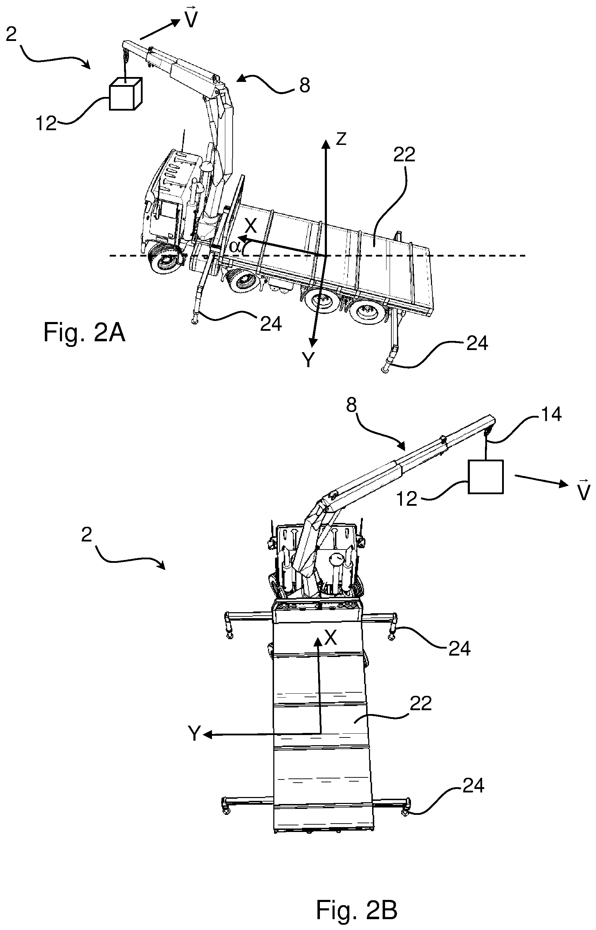

Fig. 2A illustrates a perspective side view of a lorry crane 2 according to the invention, wherein Fig. 2B illustrates a perspective top view of the lorry crane shown in Fig. 2A. The crane 2 comprises a truck bed 22 and a boom 8 arranged on a front mounted crane base. The crane 2 is provided with four hydraulically operated outrigger legs 24. It is important to underline that the crane may be equipped with another number of outrigger legs 24. In one embodiment, the crane 2 may be equipped with two outrigger legs 24.

The truck bed 22 has a longitudinal axis X, a lateral axis Y and a normal axis Z extending perpendicular to the plane spanned by longitudinal axis X and the lateral axis Y. The angle $\alpha$ between horizontal (shown with a dotted line) and the longitudinal axis X is indicated.

The boom 8 carries a load 12 that is attached to the boom 8. A sling 14 is attached to the load 12 and to a hook provided at the distal end of the boom 8. The load 12 is being moved clockwise and the velocity $\vec{V}$ of the load 12 is indicated with an arrow.

If the angle $\alpha$ is larger or equal to a predefined value (e.g. 5 %), the crane operation system (not shown) will operate the crane 2 in a restricted mode R.

In the restricted mode R the load capacity of the crane 2 and the speed of the load 12 or at least one boom 8 and the acceleration of the load 12 is reduced to a level lower than the level in normal mode N.

The speed of the load 12 or at least one boom 8 may be detected by any suitable sensor.

In one embodiment, the position of a hook arranged at the distal of the boom 8 is monitored by a sensor. Hereby, the velocity and/or the acceleration of the hook can be determined. The velocity and/or the acceleration of the hook can be used to estimate or determine the velocity and/or the acceleration of the load 12.

In one embodiment, the position of the distal of the boom 8 is determined by detected angular positions of the sections of the boom 8. This may be conducted by applying data that is already available in prior art crane control systems. Accordingly, the velocity and/or the acceleration of the distal end of the boom 8 can be calculated and the velocity and/or the acceleration of the distal end of the boom 8 may be applied as an estimate of the velocity and/or the acceleration of the load 12.

The the reduction of the load capacity of the crane and the speed of the load or at least one boom and the acceleration of the load 12 in the restricted mode R depends on the slew position of the boom 8.

In a preferred embodiment, the method as well as the crane operation system according to the invention is configured in such a manner that if the lorry crane is resting on an inclined surface and the boom extends in such a direction that the mass of the boom as well as the mass of the load generates a torque that stabilizes the lorry crane, then the reduction of the load capacity of the crane and the speed of the load or at least one boom and the acceleration of the load 12 in the restricted mode R is smaller than if the lorry crane was resting on an inclined surface and the boom extended in such a direction that the mass of the boom as well as the mass of the load generated a torque that reduced the stability of the lorry crane.

This means that if the boom extends in extension of the rear end of the lorry crane and the front end of the lorry crane is positioned in a higher vertical position than the rear end of the lorry crane, then the mass of the boom as well as the mass of the load generates a torque that increases the stability of the lorry crane.

On the other hand, if the boom extends in extension of the front end of the lorry crane, wherein the front end of the lorry crane is positioned in a higher vertical position than the rear end of the lorry crane, then the mass of the boom as well as the mass of the load generates a torque that reduces the stability of the lorry crane.

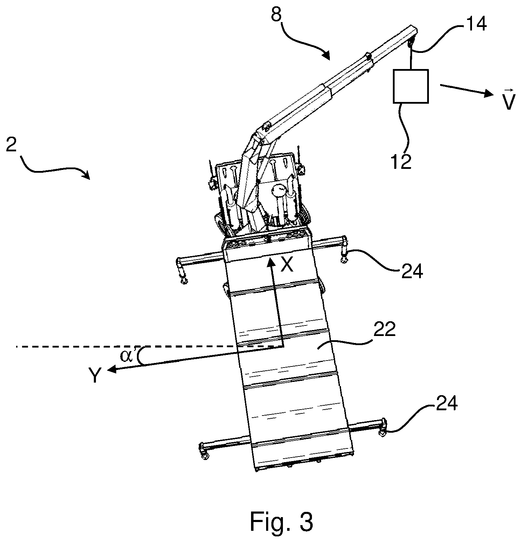

Fig. 3 illustrates a perspective top view of the lorry crane 2 shown in Fig. 2B. The crane 2, however, is arranged on another ground surface having another slope $\alpha$' relative to horizontal (indicated with a dotted line). The truck bed 22 of the crane 2 is tilted to the side. Accordingly, there is a non-zero angle $\alpha$' between the lateral axis Y (extending perpendicular to the longitudinal axis X of the truck bed 22) and horizontal.

I this angle $\alpha$' exceeds or is equal to a predefined value (e.g. 4 %), the crane operation system (not shown) will operate the crane 2 in a restricted mode R, in which the load capacity of the crane 2 and the speed of the load 12 or at least one boom 8 and the acceleration of the load 12 is reduced to a level lower than the level in normal mode N.

The velocity $\vec{V}$ of the load 12 is indicated in Fig. 3. In one embodiment, the crane operation system (not shown) of the crane 2 will operate the crane 2 in a restricted mode R, in which the speed (the magnitude of the velocity $\vec{V}$ of the load 12) is reduced to a level lower than the level in normal mode N. Hereby, the crane 2 can be safely operated on a sloped surface.

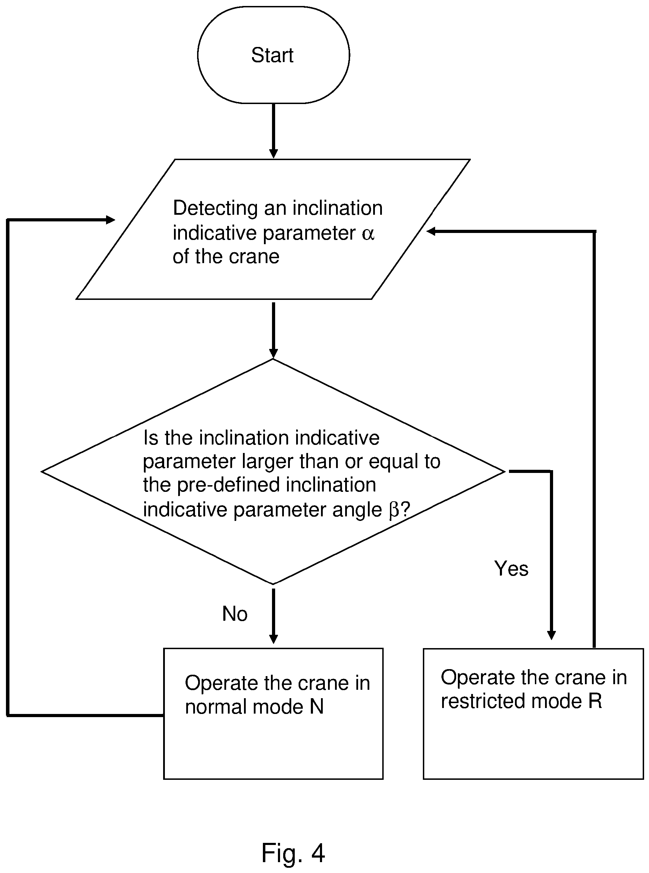

Fig. 4 shows a flow chart illustration the method according to the invention. It can be seen that the method comprises the step of detecting an inclination indicative parameter $\alpha$. The inclination indicative parameter $\alpha$ is the inclination angle of the crane relative to horizontal.

After detecting an inclination indicative parameter $\alpha$, the method comprises the step of determining whether the inclination indicative parameter is larger than a pre-defined inclination indicative parameter angle (e.g. an inclination of 5 %).

It can be seen that if the detected inclination indicative parameter $\alpha$ is larger than or equal to a pre-defined inclination indicative parameter angle, the crane is operated in a restricted mode R.

If, however, that if the detected inclination indicative parameter $\alpha$ is smaller than the pre-defined inclination indicative parameter angle, the crane is operated in normal mode N.

The procedure can preferably be repeated to make sure that the crane is always operated in the most optimum way. By repeating the procedure, it is possible to change the mode of operation of the crane as the inclination indicative parameter $\alpha$ changes as function of time.

**List of reference numerals**

| 2 | Crane |
|---|---|
| 4 | Crane base |
| 6 | Column |
| 8 | Boom |
| 10 | Hook |
| 12 | Load |
| 14 | Sling |
| 16 | Inclination sensor |
| 18 | Comparison unit |

| 20 | Crane operation system |
|---|---|
| 22 | Truck bed |
| 24 | Outrigger leg |
| G | Ground |
| $\alpha, \alpha'$ | Inclination angle |
| $\beta$ | Design specific inclination angle |
| $\vec{F}$ | Force |
| $\vec{F}_{horizontal}$ | Force (horizontal component) |
| $\vec{F}_{vertical}$ | Force (vertical component) |
| V | Velocity |
| X, Y, Z | Axis |
| N | Normal mode |
| R | Restricted mode |

**Claims**

1. A method for operating a lorry crane (2), which is a truck mounted crane, the method comprising providing a lorry crane (2) having at least one boom (8) configured to carry a load (12), wherein the method comprises the step of detecting an inclination indicative parameter ($\alpha$) of the crane (2), wherein the inclination indicative parameter ($\alpha$) is the inclination ($\alpha$) of the crane (2), wherein the method comprises the step of detecting the inclination ($\alpha$) of the crane (2) in several directions either by means of a multi-axis inclination sensor (16) or by using several inclination sensors (16), **characterised in that** the method comprises the following steps:

   - comparing the detected inclination indicative parameter ($\alpha$) of the crane (2) with a pre-defined inclination indicative parameter ($\beta$);
   - operating the crane (2) in a normal mode (N) if the detected inclination indicative parameter ($\alpha$) of the crane (2) is smaller than or equal to the pre-defined inclination indicative parameter ($\beta$);
   - operating the crane (2) in a restricted mode (R), in which:

      a) the load capacity of the crane (2) and
      b) the speed of the load (12) or at least one boom (8) and
      c) the acceleration of the load (12) is reduced to a level that is lower than the level in normal mode (N), if the detected inclination indicative parameter ($\alpha$) of the crane (2) is larger than the pre-defined inclination indicative parameter ($\beta$),

   wherein the reduction of

      a) the load capacity of the crane (2) and
      b) the speed of the load (12) or at least one boom (8) and
      c) the acceleration of the load (12) in the restricted mode (R) boom depends on the slew position of the boom (8).

2. A method according to claim 1, **characterised in that** the lower level is selected in such a manner that uncontrolled movements of the crane (2) are no longer possible.

3. A method according to one of the preceding claims 1-2, **characterised in that** in the restricted mode (R), the load capacity of the crane (2) is reduced to a level corresponding to at most the load capacity of the crane (2) in the normal mode (N) times cos ($\beta$).

4. A lorry crane (2), which is a truck mounted crane comprising a crane operation system (20) for operating the lorry crane (2) having at least one boom (8) configured to carry a load (12), wherein the crane operation system (20) comprises a inclination sensor (16) arranged and is configured to detect the inclination indicative parameter ($\alpha$) of the crane (2), wherein the inclination indicative parameter ($\alpha$) is the inclination of the crane (2), wherein the crane operation system (20) comprises a multi-axis inclination sensor (16) or several inclination sensors (16) configured to detect the inclination ($\alpha$) of the crane (2) in several directions, **characterised in that** the crane operation system (20) comprises a comparison unit (18) configured to compare the detected inclination indicative parameter ($\alpha$) of the crane (2) with a pre-defined inclination indicative parameter ($\beta$),

   wherein the crane operation system (20) is configured to operate the crane (2) in a normal mode (N) if the detected inclination indicative parameter ($\alpha$) of the crane (2) is smaller than or equal to the pre-defined inclination indicative parameter ($\beta$), wherein the crane operation system (20) is configured to operate the crane (2) in a restricted mode (R), in which:

      a) the load capacity of the crane (2) and
      b) the speed of the load (12) or at least one boom (8) and
      c) the acceleration of the load (12) is reduced to a level that is lower than the level in normal mode (N), if the detected inclination indicative parameter ($\alpha$) of the crane (2) is larger than the pre-defined inclination indicative parameter ($\beta$),

   wherein the reduction of:

      a) the load capacity of the crane and
      b) the speed of the load or at least one boom and
      c) the acceleration of the load in the restricted mode depends on the slew position of the boom.

5. A lorry crane (2) according to claim 4, **characterised**

**in that** the lower level is selected in such a manner that uncontrolled movements of the crane (2) are no longer possible.

6. A lorry crane (2) according to one of the preceding claims 4-5, **characterised in that** in the restricted mode (R), the load capacity of the crane (2) is reduced to a level corresponding to at most the load capacity of the crane (2) in the normal mode (N) times cos (β).

**Patentansprüche**

1. Verfahren zum Betreiben eines LKW-Krans (2), wobei es sich um einen auf einen Lastwagen montierten Kran handelt, wobei das Verfahren das Bereitstellen eines LKW-Krans (2) umfasst, der wenigstens einem Ausleger (8) aufweist, der dazu konfiguriert ist, eine Last (12) zu tragen, wobei das Verfahren den Schritt des Erkennens eines die Neigung anzeigenden Parameters (α) des Krans (2) umfasst, wobei der die Neigung anzeigende Parameter (α) die Neigung (α) des Krans (2) ist, wobei das Verfahren den Schritt des Nachweisens der Neigung (α) des Krans (2) in mehrere Richtungen entweder mit Hilfe eines Mehrachsenneigungssensors (16) oder durch Verwenden mehrerer Neigungssensoren (16) umfasst, **dadurch gekennzeichnet, dass** das Verfahren die folgenden Schritte umfasst:

   - Vergleichen des erkannten die Neigung anzeigenden Parameters (α) des Krans (2) mit einem vordefinierten die Neigung anzeigenden Parameter (β);
   - Betreiben des Krans (2) in einem normalen Modus (N), wenn der erkannte die Neigung anzeigende Parameter (α) des Krans (2) kleiner als oder gleich dem vordefinierten die Neigung anzeigenden Parameter (β) ist;
   - Betreiben des Krans (2) in einem eingeschränkten Modus (R), in dem:

      a) die Lastkapazität des Krans (2) und
      b) die Geschwindigkeit der Last (12) oder wenigstens eines Auslegers (8) und
      c) die Beschleunigung der Last (12) auf ein Niveau reduziert wird, das niedriger ist als das Niveau in einem normalen Modus (N), wenn der erkannte die Neigung anzeigende Parameter (α) des Krans (2) größer ist als der vordefinierte die Neigung anzeigende Parameter (β),

   wobei die Reduktion von

      a) der Lastkapazität des Krans (2) und
      b) der Geschwindigkeit der Last (12) oder wenigstens eines Auslegers (8) und
c) der Beschleunigung der Last (12) im eingeschränkten Modus (R) von der Schwenkposition des Auslegers (8) abhängt.

2. Verfahren nach Anspruch 1, **dadurch gekennzeichnet, dass** das niedrigere Niveau auf eine solche Weise ausgewählt wird, dass ungesteuerte Bewegungen des Krans (2) nicht länger möglich sind.

3. Verfahren nach einem der vorhergehenden Ansprüche 1-2, **dadurch gekennzeichnet, dass** in dem eingeschränkten Modus (R) die Lastkapazität des Krans (2) auf ein Niveau reduziert wird, das höchstens der Lastkapazität des Krans (2) in dem normalen Modus (N) mal cos (β) entspricht.

4. LKW-Kran (2), wobei es sich um einen auf einen Lastwagen montierten Kran handelt, umfassend ein Kranbetriebssystem (20) zum Betreiben des LKW-Krans (2) mit wenigstens einem Ausleger (8), der dazu konfiguriert ist, eine Last (12) zu tragen, wobei das Kranbetriebssystem (20) einen Neigungssensor (16) umfasst, der angeordnet und dazu konfiguriert ist, den die Neigung anzeigenden Parameter (α) des Krans (2) zu erkennen, wobei der die Neigung anzeigende Parameter (α) die Neigung des Krans (2) ist, wobei das Kranbetriebssystem (20) einen Mehrachsenneigungssensor (16) oder mehrere Neigungssensoren (16) umfasst, die konfiguriert sind, um die Neigung (α) des Krans (2) in mehreren Richtungen nachzuweisen, **dadurch gekennzeichnet, dass** das Kranbetriebssystem (20) eine Vergleichseinheit (18) umfasst, die dazu konfiguriert ist, den erkannten die Neigung anzeigenden Parameter (α) des Krans (2) mit einem vordefinierten die Neigung anzeigenden Parameter (β) zu vergleichen,

   wobei das Kranbetriebssystem (20) dazu konfiguriert ist, den Kran (2) in einem normalen Modus (N) zu betreiben, wenn der erkannte die Neigung anzeigende Parameter (α) des Krans (2) kleiner als oder gleich dem vordefinierten die Neigung anzeigenden Parameter (β) ist, wobei das Kranbetriebssystem (20) dazu konfiguriert ist, den Kran (2) in einem eingeschränkten Modus (R) betrieben zu werden, in dem:

      a) die Lastkapazität des Krans (2) und
      b) die Geschwindigkeit der Last (12) oder wenigstens eines Auslegers (8) und
      c) die Beschleunigung der Last (12) auf ein Niveau reduziert wird, das niedriger ist als das Niveau in einem normalen Modus (N), wenn der erkannte die Neigung anzeigende Parameter (α) des Krans (2) größer ist als der vordefinierte die Neigung anzeigende Parameter (β),

wobei die Reduktion von

a) der Lastkapazität des Krans und
b) der Geschwindigkeit der Last oder wenigstens eines Auslegers und
c) der Beschleunigung der Last im eingeschränkten Modus von der Schwenkposition des Auslegers abhängt.

5. LKW-Kran (2),nach Anspruch 4, **dadurch gekennzeichnet, dass** das niedrigere Niveau auf eine solche Weise ausgewählt wird, dass ungesteuerte Bewegungen des Krans (2) nicht länger möglich sind.

6. LKW-Kran (2), nach einem der vorhergehenden Ansprüche 4-5, **dadurch gekennzeichnet, dass** in dem eingeschränkten Modus (R) die Lastkapazität des Krans (2) auf ein Niveau reduziert wird, das höchstens der Lastkapazität des Krans (2) in dem normalen Modus (N) mal cos ($\beta$) entspricht.

## Revendications

1. Procédé pour faire fonctionner une grue (2) de camion, qui est une grue montée sur un camion, le procédé comprenant la fourniture d'une grue (2) de camion ayant au moins une flèche (8) conçue pour porter une charge (12), le procédé comprenant l'étape de détection d'un paramètre indicatif d'inclinaison ($\alpha$) de la grue (2), dans lequel le paramètre indicatif d'inclinaison ($\alpha$) est l'inclinaison ($\alpha$) de la grue (2), le procédé comprenant l'étape de détection de l'inclinaison ($\alpha$) de la grue (2) dans plusieurs directions, soit au moyen d'un capteur (16) d'inclinaison multiaxe, soit à l'aide de plusieurs capteurs (16) d'inclinaison, **caractérisé en ce que** le procédé comprend les étapes suivantes consistant à :

   - comparer le paramètre indicatif d'inclinaison ($\alpha$) détecté de la grue (2) avec un paramètre indicatif d'inclinaison ($\beta$) prédéfini ;
   - faire fonctionner la grue (2) dans un mode normal (N) si le paramètre indicatif d'inclinaison ($\alpha$) détecté de la grue (2) est inférieur ou égal au paramètre indicatif d'inclinaison ($\beta$) prédéfini ;
   - faire fonctionner la grue (2) dans un mode restreint (R), dans lequel :

   a) la capacité de charge de la grue (2) et
   b) la vitesse de la charge (12) ou d'au moins une flèche (8) et
   c) l'accélération de la charge (12) est réduite à un niveau qui est inférieur au niveau en mode normal (N), si le paramètre indicatif d'inclinaison ($\alpha$) détecté de la grue (2) est supérieur au paramètre indicatif d'inclinaison ($\beta$) prédéfini,

dans lequel la réduction de

a) la capacité de charge de la grue (2) et
b) la vitesse de la charge (12) ou d'au moins une flèche (8) et
c) l'accélération de la charge (12) dans la flèche en mode restreint (R) dépend de la position d'orientation de la flèche (8).

2. Procédé selon la revendication 1, **caractérisé en ce que** le niveau inférieur est choisi de manière à ce que les mouvements incontrôlés de la grue (2) ne soient plus possibles.

3. Procédé selon l'une des revendications précédentes 1 à 2, **caractérisé en ce que,** dans le mode restreint (R), la capacité de charge de la grue (2) est réduite à un niveau correspondant au plus à la capacité de charge de la grue (2) en mode normal (N) multiplié par cos ($\beta$).

4. Grue (2) de camion, qui est une grue montée sur un camion, comprenant un système (20) de fonctionnement de grue pour faire fonctionner la grue (2) de camion ayant au moins une flèche (8) conçue pour porter une charge (12), dans laquelle le système (20) de fonctionnement de grue comprend un capteur d'inclinaison (16) agencé et configuré pour détecter le paramètre indicatif d'inclinaison ($\alpha$) de la grue (2), dans laquelle le paramètre indicatif d'inclinaison ($\alpha$) est l'inclinaison de la grue (2), dans laquelle le système (20) de fonctionnement de grue comprend un capteur (16) d'inclinaison multiaxe ou plusieurs capteurs (16) d'inclinaison configurés pour détecter l'inclinaison ($\alpha$) de la grue (2) dans plusieurs directions, **caractérisée en ce que** le système (20) de fonctionnement de grue comprend une unité de comparaison (18) configurée pour comparer le paramètre indicatif d'inclinaison ($\alpha$) détecté de la grue (2) avec un paramètre indicatif d'inclinaison ($\beta$) prédéfini,

   dans laquelle le système (20) de fonctionnement de grue est configuré pour faire fonctionner la grue (2) dans un mode normal (N) si le paramètre indicatif d'inclinaison ($\alpha$) détecté de la grue (2) est inférieur ou égal au paramètre indicatif d'inclinaison ($\beta$) prédéfini, dans laquelle le système (20) de fonctionnement de grue est configuré pour faire fonctionner la grue (2) dans un mode restreint (R), dans lequel :

   a) la capacité de charge de la grue (2) et
   b) la vitesse de la charge (12) ou d'au moins une flèche (8) et
   c) l'accélération de la charge (12) est réduite à un niveau qui est inférieur au niveau en mode normal (N), si le paramètre indicatif d'inclinaison ($\alpha$) détecté de la grue (2) est supérieur au paramètre indicatif d'inclinaison ($\beta$) prédéfini,

dans laquelle la réduction de :

a) la capacité de charge de la grue et
b) la vitesse de la charge ou d'au moins une flèche et
c) l'accélération de la charge dans le mode restreint dépend de la position d'orientation de la flèche.

5. Grue (2) de camion selon la revendication 4, **caractérisée en ce que** le niveau inférieur est sélectionné de telle manière que les mouvements incontrôlés de la grue (2) ne sont plus possibles.

6. Grue (2) de camion selon l'une des revendications précédentes 4 à 5, **caractérisée en ce que,** dans le mode restreint (R), la capacité de charge de la grue (2) est réduite à un niveau correspondant au plus à la capacité de charge de la grue (2) en mode normal (N) multipliée par cos ($\beta$).

Fig. 1A

Fig. 1B

Fig. 2A

Fig. 2B

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9957057 A1